# EUROPÄISCHE PATENTSCHRIFT

(11) **EP 1 428 652 B1**
(45) Veröffentlichungstag und Bekanntmachung des Hinweises auf die Patenterteilung: **06.06.2012**
(21) Anmeldenummer: 03026308.1
(22) Anmeldetag: 16.11.2003
(51) Int. Cl.: B30B 5/06, B27N 3/24, F16P 7/02

(54) **Kontinuierlich arbeitende Presse mit einer Sicherheitseinrichtung**
Continuously operating press with a safety device
Presse à fonctionnement continu avec un dispositif de sécurité

(30) Priorität: 16.11.2002 DE 10253657
(43) Veröffentlichungstag der Anmeldung: 16.06.2004
(73) Patentinhaber: Dieffenbacher GmbH Maschinen- und Anlagenbau, 75031 Eppingen (DE)
(72) Erfinder: Kroll, Detlef, Dipl.Ing., 75031 Eppingen (DE)
(74) Vertreter: Hartdegen, Anton

(56) Entgegenhaltungen:
- DE-A1- 3 913 991
- DE-A1- 4 221 895
- DE-A1- 4 234 213
- DE-A1- 10 031 551
- DE-A1- 19 622 712
- DE-A1- 19 810 553
- US-A- 5 493 961

## Beschreibung

Die Erfindung betrifft eine Sicherheitseinrichtung nach dem Oberbegriff des Patentanspruchs 1.

Zum Herstellen von Holzwerkstoffplatten kommen verstärkt kontinuierlich arbeitende Pressen zum Einsatz. Bei diesen Pressen, wie in DE 39 13 991 C2 beschrieben, wird die Presskraft durch hydraulische Stellglieder auf die Press- und Heizplatten und über die umlaufenden Rollstangen und Stahlbänder auf das Pressgut übertragen. Bei den genannten Übertragungselementen bilden die Stahlbänder mit Dicken von circa 1,5 bis 3 mm gegenüber den anderen, wesentlich steiferen Elementen das schwächste Bauteil in einer Kette.
Durch die Produktion von immer dünneren und vor allem hochverdichteten Holzwerkstoffplatten steigt die aufzuwendende Verformungsarbeit bei partiellen Dichteunterschieden des Pressgutes so stark an, dass auch schon sehr kleinflächige Dichteschwankungen, zum Beispiel durch Faserknäuel oder Leimklumpen, im Pressgut zum Bandverlauf oder gar zur Zerstörung der Stahlbänder führen können. Für die großflächigen Hydraulikzylinder liegen solche partiellen Druckschwankungen außerhalb des messbaren Bereiches.

Zur Absicherung der Stahlbänder werden beispielsweise Lichtsch ranken oder Laserstrahlen eingesetzt, die jedoch zu oft eine Notabschaltung der kontinuierlich arbeitenden Presse auslösen, weil bereits harmlose Ausbläsereffekte, das heißt Staub und/oder Faseraufwirbelungen aus der Preßgutmatte zu einem Fehlalarm und somit zu einer Abschaltung der kontinuierlich arbeitenden Presse und damit zur Produktionsunterbrechung führen können.

Mit der DE-198 10 553 A1 ist eine Sicherheitseinrichtung bekannt geworden, bei der im Einlaufbereich bzw. vor dem eigentlichen Druckbereich der kontinuierlich arbeitenden Presse in einer über die gesamte Breite der einlaufenden Preßgutmatte vorgesehenen Druckrinne in der oberen Heizplatte Druckerfassungselemente angeordnet sind, die bei Dichtefehlem und überhöhter Späne bzw. Faserschüttung auf eine oder mehrere Sensoren drückend eine Sicherheitsschaltung auslösen und damit die kontinuierlich arbeitende Presse stillsetzen oder den Pressdruck entlasten.

DE 100 31 551 C2 zeigt ebenfalls eine Sicherheitseinrichtung im Einlaufbereich einer kontinuierlich arbeitenden Presse.

Trotz der Störgrößenerfassung bleibt der Nachteil, dass keine weiteren Auswertungen über die Streugewichtsverteilung, bzw. Dichteverteilung der Matte in Längs-, aber besonders in Querrichtung möglich ist. Dies ist im Hinblick auf Materialoptimierungen im Prozess und besonders hinsichtlich der Bandlaufstabilität der kontinuierlich arbeitende Presse wichtig. Bei der Überschreitung eines Schwellwertes muss die Presse mit einem schnellen Notstop angehalten werden. Das in der Presse befindliche Produkt erleidet dabei Qualitätseinbußen oder ist Ausschuss. Außerdem entsteht Stillstandszeit im Prozess.

Der Erfindung liegt die Aufgabe zugrunde, eine Sicherheitseinrichtung zu schaffen, mit der die Erfassung und eine Auswertung der Streugewichtsverteilung, der Dichteunterschiede und der Dichteverteilung innerhalb der Mattenbreite und der Mattenlänge möglich ist, aber sie soll auch Dichtefehler, überhöhte Späne-/Faserschüttung, Mattendoppelungen und Leimklumpen, die zu Stahlbandschäden führen können, erkennen und dann ein Alarmsignal auslösen, insbesondere soll die Sicherheitseinrichtung in einer Früherkennung derartiger Fehler mögliche Schäden an der Presse vermeiden.

Die Lösung dieser Aufgabe besteht darin, dass die jeweils in einem kurzen Abschnitt der Pressenbreite vorgesehenen Druckerfassungselemente als Druck- oder Kraftaufnehmer die partiellen Gegendruckkräfte der Pressgutmatte in Messsignale auflösende und einem Auswerteprogramm zuführende Werte erfassen und bei Schwellwertüberschreitung als direkter Signalausgang aus jedem einzelaufnehmenden Druckerfassungselement einen Rechner zuführen und die Druckerfassungselemente unter dem Verdichtungsdruck einer Druckrolle der Vorpresse angeordnet sind und wobei das Alarmsignal der Sicherheitseinrichtung den als fehlerhaft erkannten Bereich der Pressgutmatte ausschleust, ohne den kontinuierlichen Pressprozess zu unterbrechen.

Die Sicherheitseinrichtung gemäß der Erfindung erwirkt im Zusammenhang mit der bereits vorhandenen Gesamtflächengewichtswaage eine genauere Aussage, d.h. sie ergibt genauere Werte über die Verteilung des Streugewichtes längs und quer der Pressgutmatte. Dabei erfolgt die Erfassung und Auswertung der Sensorsignale bewusst weit vor der Presse, um bei eventuellen Überschreitungen der Grenzwerte den kritisch befundenen Bereich der Preßgutmatte ohne Unterbrechung des Gesamtprozesses als Fehlschüttung auszuschleusen oder bei größeren Fehlern den Pressendurchsatz zu verringern bzw. nötigenfalls ganz Anzuhalten.

Von Vorteil ist weiter, dass die einzelnen Druckerfassungselemente in der Breite variabel sind, vorzugsweise zwischen 10 bis 100 mm breit, und einzeln ausgetauscht werden können, dadurch kann die Messung bei Bedarf verfeinert werden.

Durch zusätzliche sensorische Erfassung des beidseitigen Randabstandes der Pressgutmatte ist eine exakte partielle Kraftermittlung im Randbereich und Erkennung der Mattenposition auf dem Formband möglich und die erfassten Mattenrandparameter, wie die Gewichtsverteilung und die Position der Matte, können zu Materialoptimierung in der Matte und zur Vermeidung von Bandlaufproblemen (Verlauf aus der Längsmittenachse) in der kontinuierlich arbeitende Presse verwendet werden.

Von Vorteil ist auch, dass kleinflächige Druckerfassungselemente in der Druckrinne über die gesamte Produktbreite angeordnet sind um partielle Dichteschwankungen über ein biegeweiches Sicherheitsblech durch stationär angebrachte Sensoren zu übertragen und messbar zu machen.

Die partiellen Druckerhöhungen in der durchlaufenden Pressgutmatte werden auf das Sicherheitsblech übertragen und in Form von partiellen Durchbiegungen des Sicherheitsbleches von den Sensoren erkannt und an eine Auswerteschaltung zur Auslösung des Alarmsignals weitergegeben. Die Druckerfassungselemente können dabei mit den hydraulischen Anstellzylindern in einem Druckbereich arbeiten, der zwischen 0,1 und 1 N/mm² spezifischen Flächedruck liegt und bei Ereichung eines vorgegebenen Schwellwertes Alarm auslösen. Dabei soll der Pressdruck hoch genug sein entsprechende Dichtefehler zu erkennen, andererseits soll er nicht so hoch sein, dass aus diesen Dichtefehlern eine Beschädigung der Stahlbänder entstehen kann. Die freitragende Strecke c des Sicherheitsbleches über der Druckrinne wird so gewählt, dass sich die auftretenden Verformungen durch die temperaturbeständigen Sensoren auswerten lassen, ohne dass eine Überlastung des Sicherheitsbleches auftritt.

Weitere vorteilhafte Merkmale, Maßnahmen und Ausgestaltungen des Gegenstandes der Erfindung gehen aus den Unteransprüchen und der folgenden Beschreibung mit der Zeichnung hervor.

Es zeigen:
- Figur 1: die Sicherheitseinrichtung gemäß der Erfindung in Seitenansicht im Bereich einer Vorpresse
- Figur 2: die Sicherheitseinrichtung in einem Ausschnitt A nach Figur 1,
- Figur 3: die Sicherheitseinrichtung in einem Schnitt a-a aus Figur 2 in größerem Maßstab,
- Figur 4: in einem Ausschnitt die Sicherheitseinrichtung im vergrößerten Maßstab aus Figur 2 und
- Figur 5: die Sicherheitseinrichtung als rollende Abstützung für die Druckerfassungselemente.

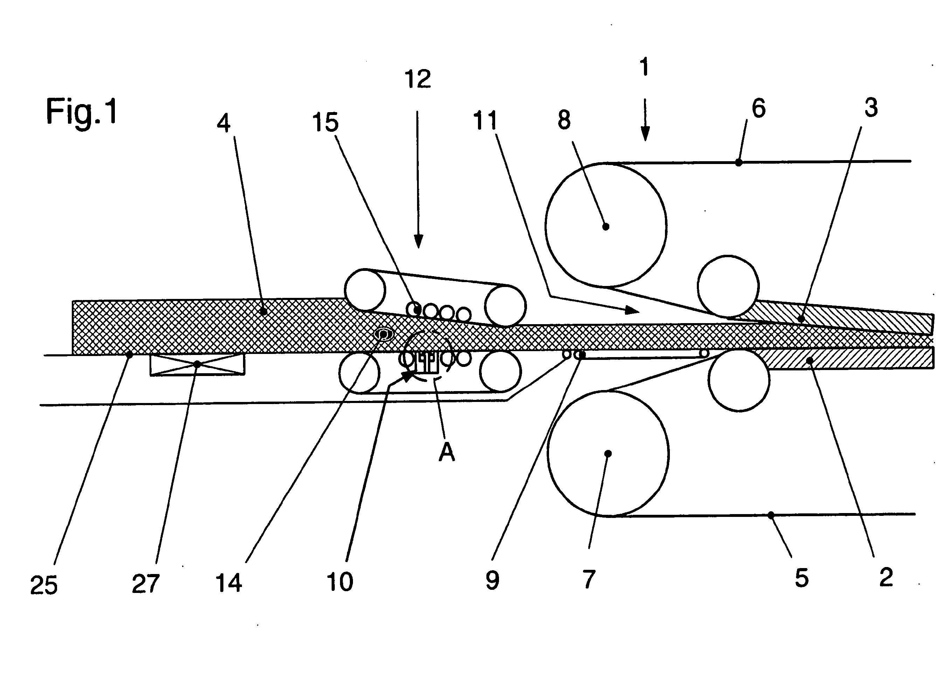

In den Figuren 1 bis 5 ist in Ausführungsbeispielen die Sicherheitseinrichtung 10 nach der Erfindung im Bereich, einer Vorpresse 12 der kontinuierlich arbeitende Presse 1 angeordnet. In einer Druckrinne 17 eines Querträgers 21, der über die gesamte Breite b der durchlaufenden Preßgutmatte 4 reicht, sind Druckerfassungselemente 13 vorgesehen, die Dichtefehler oder Inhomogenitäten in der Preßgutmatte 4 und überhöhte Späne-/Faserschüttungen 14 mittels Sensoren 16 an der zutreffenden Stelle erfassen und ein Alarmsignal auslösen, wonach der fehlerhafte Bereich der Matte ausgeschleudert wird. Die im Ausführungsbeispiel dargestellte kontinuierlich arbeitende Presse 1 besteht aus den Pressdruck übertragenden sowie das Pressgut durch die Presse 1 ziehenden, flexiblen zwei endlosen Stahlbändern 5 und 6, die über Antriebstrommeln (nicht dargestellt) und Umlenktrommeln 7 und 8 um den unteren Rahmenteil 2 und den oberen Rahmenteil 3 geführt sind und die sich mit einstellbarem Pressspalt über mitumlaufende rollende Stützelemente bzw. Rollstangen (nicht dargestellt) gegenüber den Rahmenteilen 2 und 3 abstützen.
Die Pressgutmatte 4 wird dabei über eine Beschickeinrichtung 9 im Einlaufspalt 11 auf das untere Stahlband 5 übergeben.

Die Druckerfassungselemente 13 sind in einem engen Raster und Abstand von vorzugsweise 10 bis 100 mm von Sensor 16 zu Sensor 16 in der Druckrinne 17 angeordnet, um auch kleinere Störgrößen, zum Beispiel Leimklumpen, zu erkennen und die Sicherheitsschaltung auszulösen. Damit die Ansprechzeit der Sicherheitsschaltung zur Stillsetzung oder insbesondere zu Ausscheiden des fehlerhaften Teils ohne Abschaltung der kontinuierlich arbeitenden Presse 1 ausreicht, bevor die Störgröße den Hochdruckbereich der kontinuierlich arbeitende Presse erreicht, ist die Sicherheitseinrichtung 10 genügend weit davor in der Vorpresse 12 angeordnet. Die Vorpresse 12 ist dabei als Doppelbandpresse ausgeführt, wobei die umlaufenden Bänder über Umlenkrollen 19 geführt sind. Mit 27 ist eine Flächengewichtswaage bezeichnet.

Zur partiellen Erfassung der Drucküberhöhungen in der Preßgutmatte 4 ist zweckmäßigerweise ein Sicherheitsblech oder biegeweiches Gleitblech 20 über die Druckrinne 17 gespannt und fixiert, wobei die Druckerfassungselemente 13 als Einheit auf einem Querträger 21 angebracht sind, der über hydraulische Anstellzylinder 8 die Einheit gegen das Pressgut drückt und dabei der spezifische Pressdruck zwischen 0,1 und d1 N/mm² liegt

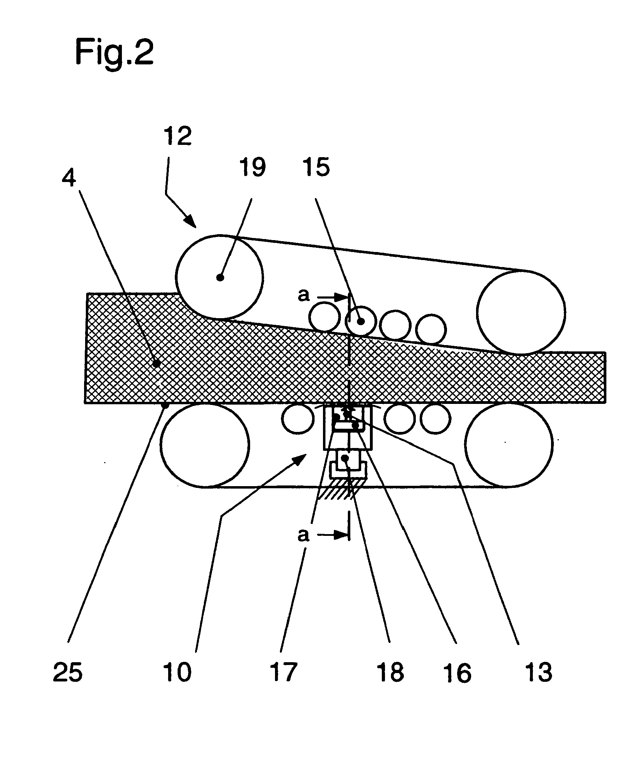

Die Figuren 2 bis 4 zeigen die erfindungsgemäße Sicherheitseinrichtung 10 im Bereich einer Vorpresse 12, wobei die Druckerfassungselemente 13 unter dem Verdichtungsdruck der Druckrollen 15 einer Vorpresse 12 stehen. Dazu gehört, dass die Druckrollen 15 mittels hydraulischen Anstellzylindern 18 gegen die in einer Druckrinne 17 eines Querträgers 21 angeordneten Druckerfassungselemente 13 arbeiten und die Preßgutmatte 4 mittels dem Formband 25 durch die Vorpresse 12 gezogen sowie in die kontinuierlich arbeitende Presse 1 weitergeführt wird.

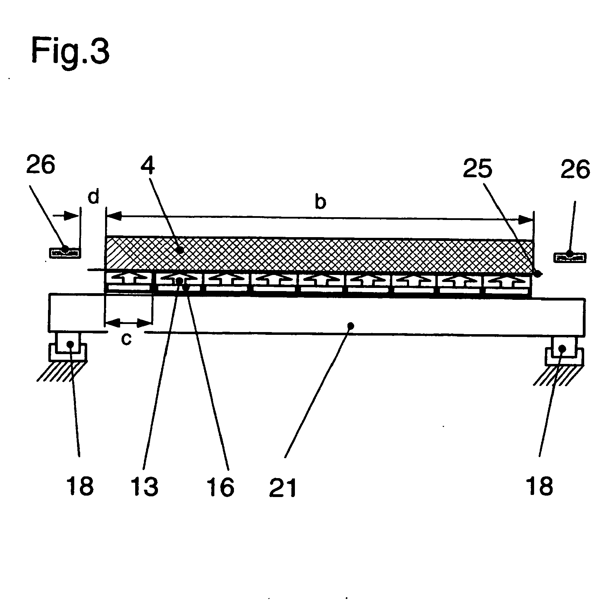

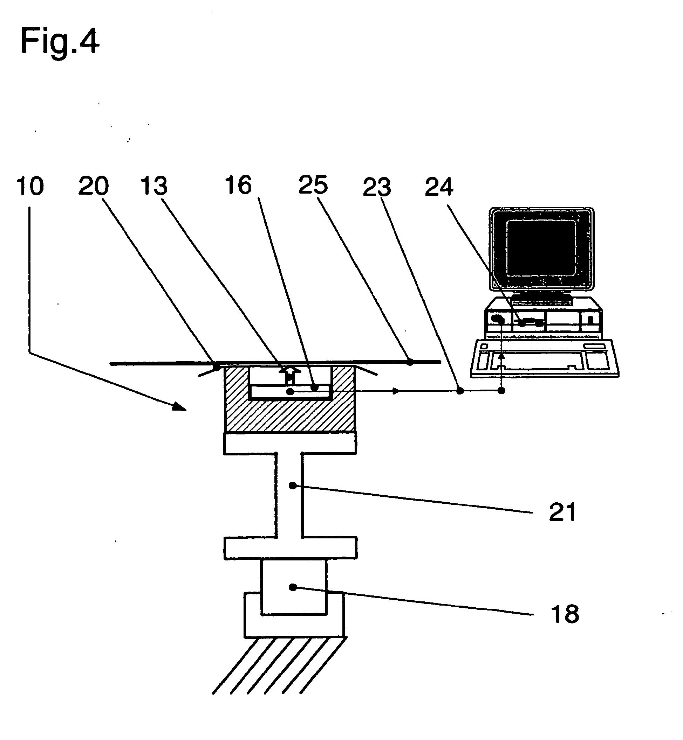

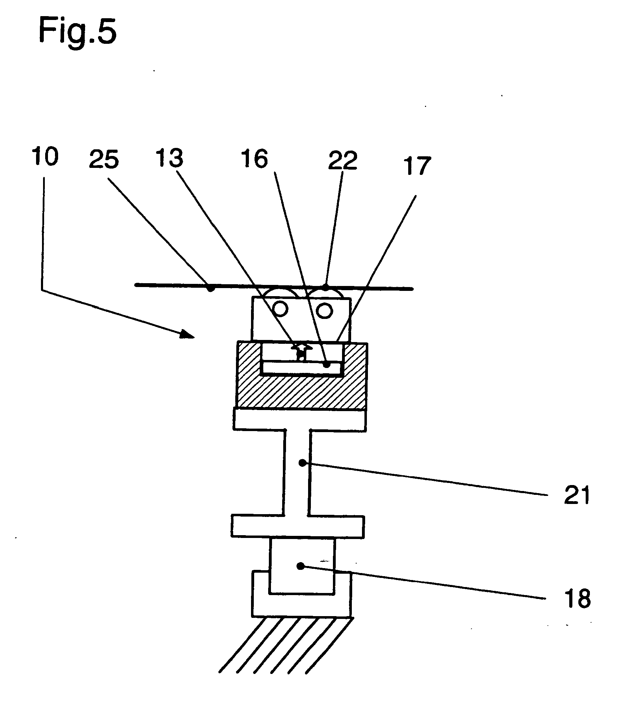

Nach Figur 3 sind die Druckerfassungselemente 13 direkt mit Kontakt zum Formband 25 angeordnet, während nach Figur 4 über den Druckrinnenspalt zusätzlich ein Gleitblech bzw. ein Sicherheitsblech 20 vorgesehen ist.
In einer weiteren Ausführung nach Figur 5 sind die Druckerfassungselemente 13 mittels mehreren Walzen 22 abgestützt. Um einen Bandverlauf oder Pressgutverlauf zu erkennen und gegebenenfalls zu korrigieren sind nach Figur 3 Abstandssensoren 26 vorgesehen die den Randabstand zum Pressgutrand messen.

Mit der Sicherheitseinrichtung 10 nach der Erfindung besteht auch die Möglichkeit, dass durch eine Berechnungssoftware aus dem Gesamtflächengewicht der vorhandenen Flächengewichtswaage 27, den hydraulischen Anstelldrücken der Anstellzylinder 18 und den partiellen Kräften der einzelnen Sensoren 16 die Gewichtsverteilung der durchlaufenden Pressgutmatte 4 quer und längs kontinuierlich berechnet und angezeigt werden kann.

### Bezugszeichenliste:

- 1.: kontinuierlich arbeitende Presse
- 2.: Rahmenunterteil
- 3.: Rahmenoberteil
- 4.: Pressgutmatte
- 5.: Stahlband unten
- 6.: Stahlband oben
- 7.: Umlenktrommel unten
- 8.: Umlenktrommel oben
- 9.: Beschickeinrichtung
- 10.: Sicherheitseinrichtung
- 11.: Einlaufspalt
- 12.: Vorpresse
- 13.: Druckerfassungselemente
- 14.: überhöhte Späne- /Faserschüttung bzw. Dichtefehler
- 15.: Druckrollen der Vorpresse
- 16.: Sensor
- 17.: Druckrinne
- 18.: hydraulischer Anstellzylinder
- 19.: Umlenkrollen
- 20.: Sicherheitsblech
- 21.: Querträger
- 22.: Walze
- 23.: Signalleitung
- 24.: Rechner
- 25.: Formband
- 26.: Abstandssensoren
- 27.: Flächengewichtswaage

- b: Pressgutmattenbreite
- c: freitragende Strecke der Druckrinne für ein Druckerfassungselement
- d: Randabstand der Pressgutmatte vom Längsrand des Formbandes

## Patentansprüche

1. Kontinuierlich arbeitende Presse (1) mit einer Sicherheitseinrichtung (10) bei der Herstellung von Spanplatten, Faserplatten und ähnlichen Holzwerkstoffplatten sowie Kunststoffplatten, die Presse (1) bestehend aus dem Pressdruck übertragenden sowie das Pressgut durch die Presse ziehenden, flexiblen zwei endlosen Stahlbändern (5 und 6), die über Antriebstrommeln und Umlenktrommeln um Rahmenunterteil (2) und Rahmenoberteil (3) geführt sind und die sich mit einstellbarem Pressspalt über mitumlaufende rollende Stützelemente gegen Widerlager der Rahmenteile (2 und 3) abstützen und wobei die Sicherheitseinrichtung (10) vor dem eigentlichen Druckbereich der kontinuierlich arbeitenden Presse (1) in einem die gesamte Breite (b) der Pressgutmatte (4) überspannendem Querträger (21) eine Druckrinne (17) angeordnet ist in der mehrere Druckerfassungselemente (13) mittels Alarmsignal eine Sicherheitsschaltung auslösen wenn Dichtefehler oder Inhomogenitäten in der Pressgutmatte (4) und/oder überhöhte Späne-oder Faserschüttung (14) auftreten, **dadurch gekennzeichnet, dass** die jeweils in einem kurzen Abschnitt (c) der Pressenbreite (b) vorgesehenen Druckerfassungselemente (13) als Druck- oder Kraftaufnehmer die partiellen Gegendruckkräfte der Pressgutmatte (4) in Messsignale auflösende und einem Auswerteprogramm zuführende Werte erfassen und bei Schweilwertüberschreitung als direkter Signalausgang aus jedem einzelaufnehmenden Druckerfassungselement (13) einen Rechner (24) zuführen und die Druckerfassungselemente (13) unter dem Verdichtungsdruck einer Druckrolle (15) einer Vorpresse (12) angeordnet sind,
wobei das
Alarmsignal der Sicherheitseinrichtung (10) den als fehlerhaft erkannten Bereich der Pressgutmatte ausschleust, ohne den kontinuierlichen Pressprozess zu unterbrechen.

2. Kontinuierlich arbeitende Presse mit einer Sicherheitseinrichtung nach Anspruch 1, **dadurch gekennzeichnet, dass** die Druckerfassungselemente (13) mit gleitender Abstützung in der Druckrinne (17) des Querträgers (21) angeordnet sind.

3. Kontinuierlich arbeitende Presse mit einer Sicherheitseinrichtung nach den Ansprüchen 1 bis 2, **dadurch gekennzeichnet, dass** die Druckerfassungselemente (13) über mehrere Walzen (22) als rotierende Abstützung angeordnet sind.

4. Kontinuierlich arbeitende Presse mit einer Sicherheitseinrichtung nach einem oder mehreren der Ansprüche 1 bis 3, **dadurch gekennzeichnet, dass** die Druckerfassungselemente (13) bei Erreichung eines vorgegebenen Schwellwertes Alarm auslösen.

5. Kontinuierlich arbeitende Presse mit einer Sicherheitseinrichtung nach einem oder mehreren der Ansprüche 1 bis4, **dadurch gekennzeichnet, dass** den beiden Randbereichen der Druckrinne (17) zusätzliche Sensoren (26) eingebaut sind, die den Randabstand (d) zum Formband (25) erfassen und über eine Signalleitung (23) im Rechner (24) auswerten.

6. Kontinuierlich arbeitende Presse mit einer Sicherheitseinrichtung nach einem oder mehreren der Ansprüche 1 bis5, **dadurch gekennzeichnet, dass** die einzelnen Druckerfassungselemente (13) in der Breite variabel und einzeln austauschbar angeordnet sind.

7. Kontinuierlich arbeitende Presse mit einer Sicherheitseinrichtung nach einem oder mehreren der Ansprüche 1 bis 6, **dadurch gekennzeichnet, dass** die einzelnen Druckerfassungselemente (13) eine Breite von 10 bis 100 aufweisen.

8. Kontinuierlich arbeitende Presse mit einer Sicherheitseinrichtung nach einem oder mehreren der Ansprüche 1 bis7, **dadurch gekennzeichnet, dass** jeweils über dem Druckrinnenspalt ein dünnes, biegeweiches Sicherheitsblech (20) angebracht ist.

9. Kontinuierlich arbeitende Presse mit einer Sicherheitseinrichtung nach einem oder mehreren der Ansprüche 1 bis8, **dadurch gekennzeichnet, dass** die Druckerfassungselemente (13) mit gleitender Abstützung durch hydraulische Stellglieder (18) in einem Druckbereich arbeiten, der zwischen 0,1 und 1 N/mm² spezifischen Flächendruck liegt.

## Claims

1. A continuously operating press (1) having a safety device (10) for the production of particle boards, fiber boards, and similar wood-based material boards and plastic slabs, the press (1) consisting of two flexible endless steel belts (5 and 6), which transmit the compression pressure and draw the press material through the press, and which are guided via drive drums and deflection drums around the frame lower part (2) and frame upper part (3) and are supported with a settable compression gap via co-revolving rolling support elements in relation to counter bearings of the frame parts (2 and 3), and the safety device (10) being arranged before the actual pressure area of the continuously operating press (1) in a pressure trough (17) of a crossbeam (21), which spans the entire width (b) of the compressed material mat (4), in which multiple pressure detection elements (13) trigger a safety circuit by means of an alarm signal if sealing flaws or inhomogeneities occur in the compressed material mat (4) and/or excessive chip or fiber bulk fill (14), **characterized in that** the respective pressure detection elements (13) provided in a short section (c) of the compression width (b), as pressure or force pickups, detecting the partial counter pressure forces of the compressed material mat (4) as values which are resolved into measuring signals and are supplied to an analysis program, and supply them as a direct signal output from each individually-recording pressure detection element (13) to a computer (24) if a threshold value is exceeded and the pressure detection elements (13) are arranged under the compaction pressure of a pressure roller (15) of a pony press (12),
the alarm signal of the safety device (10) discarding the area of the compressed material mat which has been recognized to be flawed without interrupting the continuous compression process.

2. The continuously operating press having a safety device according to Claim 1, **characterized in that** the pressure detection elements (13) are arranged with sliding support in the pressure trough (17) of the crossbeam (21).

3. The continuously operating press having a safety device according to Claims 1 to 2, **characterized in that** the pressure detection elements (13) are arranged over multiple rollers (22) as a rotating support.

4. The continuously operating press having a safety device according to one or more of Claims 1 to 3, **characterized in that** the pressure detection elements (13) trigger the alarm upon reaching a predefined threshold value.

5. The continuously operating press having a safety device according to one or more of Claims 1 to 4, **characterized in that** additional sensors (26) are installed on the two edge areas of the pressure trough (17), which detect the edge spacing (d) to the shaping belt (25) and analyze it in the computer (24) via a signal line (23).

6. The continuously operating press having a safety device according to one or more of Claims 1 to 5, **characterized in that** the individual pressure detection elements (13) are arranged variably in width and so they are individually replaceable.

7. The continuously operating press having a safety device according to one or more of Claims 1 to 6, **characterized in that** the individual pressure detection elements (13) have a width of 10 to 100.

8. The continuously operating press having a safety device according to one or more of Claims 1 to 7, **characterized in that** a thin, flexible safety plate (20) is attached in each case over the pressure trough gap.

9. The continuously operating press having a safety device according to one or more of Claims 1 to 8, **characterized in that** the pressure detection elements (13), with sliding support by hydraulic actuators (18), operate in a pressure range which is between 0.1 and 1 N/mm² specific pressure per unit area.

## Revendications

1. Presse fonctionnant en continu (1) avec un dispositif de sécurité (10) dans la fabrication de panneaux de particules, de panneaux de fibres et autres panneaux de matériau à base de bois similaires ainsi que de plaques de plastique, laquelle presse (1) se compose de deux bandes d'acier (5 et 6) flexibles sans fin qui transmettent la pression de pressage et tirent la matière à presser à travers la presse, qui sont passées sur des tambours d'entraînement et des tambours de renvoi autour de la partie supérieure (2) du châssis et de la partie inférieure (3) du châssis et qui s'appuient avec un interstice de pressage réglable par des éléments d'appui roulant en même temps contre le contre-appui des parties de châssis (2 et 3), et dans laquelle le dispositif de sécurité (10) est disposé avant la zone de pressage proprement dite de la presse (1) fonctionnant en continu dans un support transversal (21) s'étendant sur toute la largeur (b) du tapis de matière à presser (4) avec une gorge de pressage (17) dans laquelle plusieurs éléments de mesure de la pression (13) déclenchent un circuit de sécurité au moyen d'un signal d'alarme si des défauts de densité ou d'homogénéité et/ou une accumulation trop haute de copeaux ou de fibres (14) apparaissent dans le tapis de matière à presser (4), **caractérisée en ce que** les éléments de mesure de la pression (13) prévus dans une courte section (c) de la largeur de la presse (b) servent de capteurs de pression ou de force pour capter les forces de contre-pression partielles du tapis de matière à presser (4) dans des valeurs résolvant les signaux de mesure et les transmettant à un programme d'analyse et, en cas de dépassement du seuil, les transmettent à un calculateur (24) sous la forme d'une sortie de signal directe à partir de chaque élément de mesure de la pression (13) réalisant un enregistrement séparé et les éléments de mesure de la pression (13) sont disposés sous la pression de compression d'un rouleau de pressage (15) d'une presse de préformage (12),
le signal d'alarme du dispositif de sécurité (10) excluant la zone du tapis de matière à presser reconnue comme défectueuse sans interrompre le processus de pressage en continu.

2. Presse fonctionnant en continu avec un dispositif de sécurité selon la revendication 1, **caractérisée en ce que** les éléments de mesure de la pression (13) sont disposés avec un appui coulissant dans la gorge de pressage (17) du support transversal (21).

3. Presse fonctionnant en continu avec un dispositif de sécurité selon les revendications 1 à 2, **caractérisée en ce que** les éléments de mesure de la pression (13) sont disposés sur plusieurs rouleaux (22) assurant un appui rotatif.

4. Presse fonctionnant en continu avec un dispositif de sécurité selon une ou plusieurs des revendications 1 à 3, **caractérisée en ce que** les éléments de mesure de la pression (13) déclenchent une alarme quand une valeur de seuil prédéfinie est atteinte.

5. Presse fonctionnant en continu avec un dispositif des sécurité selon une ou plusieurs des revendications 1 à 4, **caractérisée en ce que** sont montés dans les deux zones de bord de la gorge de pressage (17) des capteurs (26) supplémentaires qui mesurent la distance du bord (d) par rapport à la bande formée (25) et l'analysent dans le calculateur (24) en passant par une ligne de signal (23).

6. Presse fonctionnant en continu avec un dispositif de sécurité selon une ou plusieurs des revendications 1 à 5, **caractérisée en ce que** les différents éléments de mesure de la pression (13) ont une largeur variable et sont disposés de façon interchangeable séparément.

7. Presse fonctionnant en continu avec un dispositif de sécurité selon une ou plusieurs des revendications 1 à 6, **caractérisée en ce que** les différents éléments de mesure de la pression (13) présentent une largeur de 10 à 100.

8. Presse fonctionnant en continu avec un dispositif de sécurité selon une ou plusieurs des revendications 1 à 7, **caractérisée en ce qu'**une mince tôle de sécurité (20) flexible est disposée au-dessus de l'interstice de la gorge de pressage.

9. Presse fonctionnant en continu avec un dispositif de sécurité selon une ou plusieurs des revendications 1 à 8, **caractérisée en ce que** les éléments de mesure de la pression (13) fonctionnent avec un appui coulissant par des actionneurs hydrauliques (18) dans une plage de pression spécifique par unité de surface comprise entre 0,1 et 1 N/mm².
